# FASCICULE DE BREVET EUROPEEN

(11) **EP 0 409 704 B1**
(45) Date de publication et mention de la délivrance du brevet: **02.03.1994**
(21) Numéro de dépôt: 90402029.4
(22) Date de dépôt: 13.07.1990
(51) Int. Cl.: F16F 1/38, F16F 1/36

(54) **Articulation élastique à grand filtrage radial et limitation progressive de rigidité**
Elastisches Gelenk mit grosser Radialdämpfung und progressiver Steifigkeitsbegrenzung
Elastic joint with high radial damping and progressive restriction of rigidity

(30) Priorité: 19.07.1989 FR 8909687
(43) Date de publication de la demande: 23.01.1991
(73) Titulaire: CAOUTCHOUC MANUFACTURE ET PLASTIQUES, F-78000 Versailles (FR)
(72) Inventeur: Bourgeot, Jacques, F-95150 Taverny (FR); Bouchon, Jean-Marc, F-53300 Decize (FR); Gautheron, Michel, F-58000 Nevers (FR)

(56) Documents cités:
- EP-A- 0 163 980
- EP-A- 0 302 180
- DE-A- 2 460 738
- FR-A- 2 256 346
- US-A- 4 121 813

## Description

L'invention est du domaine des articulations élastiques faisant appel à la liaison caoutchouc-métal entre deux éléments rigides, à débattement angulaire principalement autour d'un axe, et servant à transmettre des efforts radiaux importants de part et d'autre d'une plage à filtrage antivibratoire particulièrement efficace.

L'industrie a vu apparaître la possibilité du filtrage des vibrations parasites sur un objet tel qu'un levier s'articulant sur un axe rigide, grâce à l'interposition d'une couche d'élastomère, le plus souvent en caoutchouc naturel, entre deux bagues concentriques rigides. Cette disposition est, en effet, un moyen radical pour couper la transmission de vibrations au sein des solides, grâce à la liaison élastique assurée entre eux.
L'élasticité, mécaniquement apportée par cette liaison entre deux cylindres, permet accessoirement un débattement angulaire dit "conique". Ce débattement conique s'exerce dans une direction perpendiculaire au plan du débattement principal, tandis que la fonction essentielle du débattement est une rotation autour de l'axe des cylindres concentriques. La liaison a pour fonction d'exercer des efforts permanents ou variables, principalement de façon radiale par rapport aux cylindres, par exemple entre le tube interne pris en chape sur un axe ou solidaire d'un axe massif et le tube qui l'entoure. Ce dernier est, le plus souvent, rendu solidaire d'un levier, par emmanchement à force dans un alésage rigide.

Une solidarisation intime, dite adhérisation, est assurée par voie physico-chimique au cours de la vulcanisation de l'élastomère. Elle permet le rappel élastique lors d'un excentrage entre les deux cylindres solides, limitant le volume de la matière élastiquement déformable. Il en résulte des contraintes de compression, pouvant atteindre des valeurs très élevées, du fait de l'incompressibilité volumétrique du caoutchouc, - ceci du côté où l'épaisseur initiale est réduite - et des sollicitations passant en traction à l'interface, en ce qui concerne le côté de l'assemblage où l'épaisseur est accrue. Le passage des sollicitations en un point, de part et d'autre de la valeur zéro, est connu pour être une condition très défavorable à la tenue en fatigue et les améliorations de celle-ci portent sur une précontrainte permanente de compression, grâce à laquelle les circonstances de traction ne se produisent qu'à titre tout à fait exceptionnel. Cette technique est celle décrite dans le brevet FR 1.119.841 de la société "Silentbloc", par utilisation d'un emmanchement à force d'une bague de caoutchouc entre deux cylindres.

Les procédés plus récents de précontrainte utilisant la liaison adhérisée caoutchouc-métal, parviennent aux mêmes performances en assurant la précontrainte volumétrique soit par rétreint de la bague extérieure au moyen de machine à chocs, soit par l'élargissement du diamètre intérieur - appelé "dudgeonnage", - lorsqu'une olive de diamètre supérieur est forcée à passer à travers l'alésage de la bague interne. L'une comme l'autre de ces opérations, par une réduction de l'épaisseur annulaire de l'élastomère, ne dépassant pas 10 % à 15 % de sa valeur initiale, établit une précontrainte radiale, avec gonflement résultant des parois libres, ce qui permet d'exercer, entre les deux bagues, des efforts monodirectionnels ne dépassant qu'exceptionnellement le seuil de la précontrainte.

L'existence de la précontrainte radiale autorise - et même améliore - la tenue à la fatigue alternée en rotation autour de l'axe, abaissant généralement la rigidité de torsion angulaire. La valeur géométrique de cette torsion, fréquemment atteinte, peut provoquer un cisaillement tangentiel de valeur 50 à 60 % de l'épaisseur (mesuré à mi-épaisseur par exemple). Lorsque l'angle nécessité par la fonction articulation doit atteindre ou dépasser trop fréquemment ces valeurs, le concepteur de pièces est conduit à séparer la fonction filtrage élastique de la fonction rotation par une "articulation à glissement interne" sur une surface concentrique, soit interne, soit externe à la bague élastique.

C'est, dans ce domaine, que se trouvent de nombreux perfectionnements de l'articulation élastique, tels ceux décrits dans les brevets EP0.163.980 ou US4.671.694 de BOGE et TRW-Ehrenreich.
La pièce élastomérique moulée, adhérente à l'axe tubulaire interne, est aussi solidaire d'une bague anti-usure qui l'entoure et se trouve enfermée, radialement mais aussi axialement, par ses extrêmités rabattues sous l'effet d'un serrage radial et axial de la bague rigide extérieure. La surface latérale libre de l'élastomère étant ainsi réduite, la rigidité de la liaison élastique radiale se trouve être assez élevée et la rotation de l'axe se produit d'abord élastiquement, puis par glissement de la bague anti-usure lubrifiée dans la bague rigide extérieure, au delà d'une valeur finie du couple élastique de rotation.
Ce dispositif dit "articulation à glissement interne" ne fonctionne donc qu'à titre relativement rare, lorsque la déviation est importante, par exemple dans une suspension de véhicule lors des grandes variations de charge statique, les oscillations vibratoires les plus courantes étant assurées par la déformation en torsion de la pièce élastomérique. Or, celle-ci se trouve nécessairement notablement rigide et n'assure donc qu'un filtrage anti-vibratoire limité.
Dans le sens fonctionnel d'articulation autour de l'axe, le fait de multiplier la fréquence des débattements au delà du seuil de glissement mènerait à une usure notable des surfaces anti-usure. Ceci limite l'intérêt du filtrage élastique qui ne peut être assuré qu'avec une grande raideur, le millimètre de déformabilité radiale étant très loin d'être atteint sous les plus fortes sollicitations.

Une rotule élastique du même type est décrite dans le document EP-A-0302180 de LEMFOERDER, qui précise qu'un corps élastique est enserré dans un boîtier cylindrique comportant des évidements pour moduler la rigidité, ce qui nécessite une opération mécanique sur le boîtier.

La présente invention a pour objectif d'apporter une solution mécaniquement simple à l'articulation autour d'un axe, faisant appel à la déformabilité de la liaison caoutchouc-métal précontrainte. Accessoirement, ceci permet de faibles déviations dans les directions perpendiculaires à l'axe de rotation principal.

Contrairement aux articulations cylindriques connues, elle combine une grande flexibilité à faible course, qui favorise une bonne qualité de filtrage antivibratoire, à la possibilité d'exercer des efforts importants en fin de course. Par opposition à la rotule sphérique décrite, une progressivité du passage d'un cas à l'autre est caractéristique du dispositif, ayant pour effet de ne pas limiter de façon brutale la plage à bon filtrage et les possibilités de fortes réactions.

L'invention est donc une articulation élastique à grand filtrage radial et limitation progressive de rigidité, constituée d'un tube externe entourant une bague élastique en élastomère, solidarisée, par adhérisation, à un axe plein et constituée de deux rondelles de contrainte qui limitent la bague élastique axialement et exercent sur elle une précontrainte axiale et comportant un jeu radial minime réservé, malgré l'existence de la précontrainte, entre la surface extérieure de ladite bague élastique et la surface intérieure dudit tube externe, les deux surfaces venant en contact lorsque l'effort d'excentrage est accru au delà d'une plage d'utilisation à grande flexibilité radiale. Une telle articulation est connue du EP-A-0 302 180.

L'articulation élastique objet de l'invention est caractérisée en ce que ladite bague élastique est rendue solidaire, par adhérisation, des deux rondelles de contrainte qui exercent sur elle la précontrainte axiale lorsque ledit tube externe est serti sur leurs faces extrêmes, et en ce que ledit jeu est créé par des alvéoles portées par ladite bague élastique et qui comportent une surface libre adjacente à la surface intérieure du tube externe, les alvéoles s'étendant sur le périmètre de ladite bague élastique et la surface libre des alvéoles venant progressivement en contact avec la surface intérieure adjacente dudit tube externe lorsque l'effort d'excentrage est accru au delà d'une plage d'utilisation à grande flexibilité radiale.

Le dispositif d'articulation élastique, objet de l'invention, ainsi que ses variantes, seront mieux compris à la lecture de la description accompagnant les dessins, dans lesquels :
- la figure 1 est une coupe selon l'axe principal de l'articulation élastique ;
- la figure 2 est une coupe perpendiculaire à l'axe dans le plan de symétrie de l'articulation ;
- la figure 3 est une coupe axiale des composants en place, avant exécution de la précontrainte ;
- la figure 4 est un graphique donnant la courbe caractéristique de rigidité radiale, dans le plan de la force radiale et de la course d'excentrage ;
- La figure 5 est un graphique de la rigidité axiale de la même articulation donnant la forme type de sa courbe de rigidité axiale.

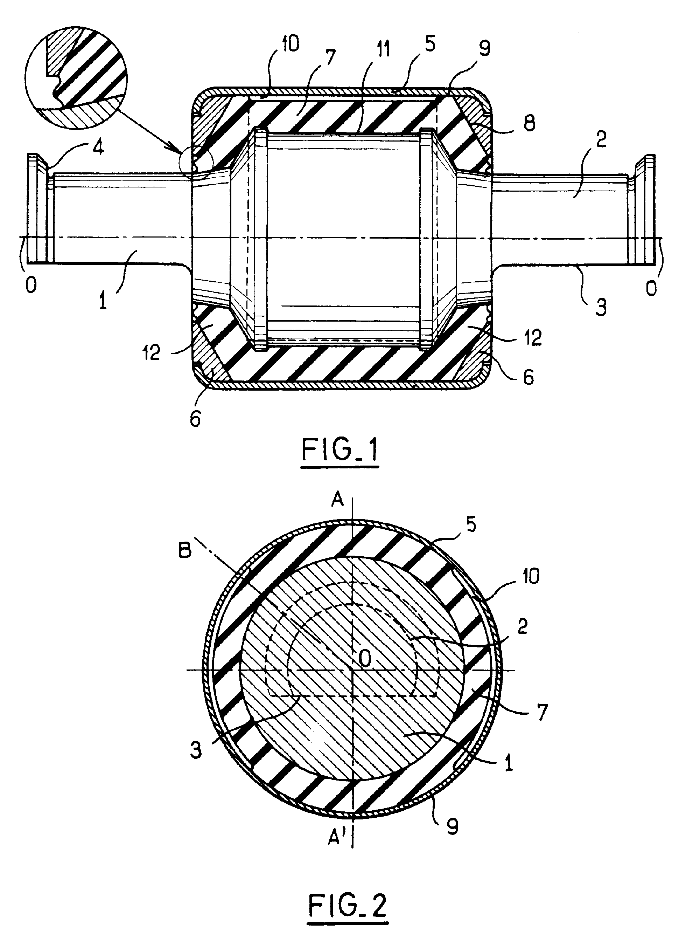

La figure 1 est une coupe selon l'axe (0) de l'articulation élastique, plus précisément suivant les deux plans, passant par l'axe, indiqués par A'OB sur la figure 2, permettant de préciser les formes libres de la partie élastique qui ne sont pas de révolution.

Un axe plein (1) assure la fixation de l'articulation par ses paliers cylindriques incomplets (2), tronqués par des méplats (3), dont la fixation plane assure l'ancrage en rotation en cas de torsion autour de l'axe.

La tenue aux efforts suivant la direction de l'axe se fait par des épaulements (4), tandis qu'un jeu suffisant sur les logements cylindriques où s'appuient les paliers cylindriques incomplets (2) permet tous débattements au tube externe (5) généralement emmanché à force dans un alésage ménagé dans le levier (non représenté) qui tourillonne élastiquement sur l'axe plein (1).

La bague élastique (7) est solidarisée par adhérisation intime, au cours de la vulcanisation, d'une part, à l'axe plein (1), par toute sa surface en regard, d'autre part, aux deux rondelles de contrainte (6) qui la limitent axialement vers l'extérieur, par leurs surfaces internes coniques (8). Le tube externe (5) ainsi que les rondelles de contrainte (6) sont de révolution ; lors de l'assemblage où celles-ci sont engagées dans ledit tube externe (5), un rapprochement axial est exercé au moment où les extremités du tube externe (5) sont rabattues par sertissage de façon à enfermer ces rondelles de contrainte (6).
La bague élastique (7) comporte, au voisinage de chacune de ses extremités, un court cylindre (9), venant, lors de l'assemblage, en appui sur le tube externe (5). Cet appui confine alors, lors de la précontrainte, la matière élastomérique comprise entre les surfaces internes coniques (8) et l'épaulement conjugué de l'axe plein (1) sensiblement de même angle conique.

Malgré la contrainte de la matière sur les courts cylindres (9), des alvéoles (10), couvrant, à titre d'exemple non limitatif, le tiers de la circonférence dans la variante représentée, ménagent sur la bague élastique (7) une surface libre autorisant un excentrage sous les efforts radiaux.

Dans la variante représentée, la déformabilité en excentrage est améliorée par un retrait (11) du cylindre limitant l'axe plein (1), qui accroit dans sa partie cylindrique l'épaisseur de la bague élastique (7), intervenant dans la loi de progressivité avant un effet de butée radiale. Lorsque le tube externe (5) vient s'appuyer sur la surface libre des alvéoles (10) sous l'effet de sollicitations radiales d'excentrage, la masse d'élastomère de la bague élastique (7) peut ainsi mieux répartir ses contraintes de compression qu'une simple couche mince qui recouvrirait l'axe plein (1). Mais avant ce contact, la rigidité d'excentrage, dont la faible valeur assure le filtrage antivibratoire, est due exclusivement au cisaillement des couronnes coniques (12), d'épaisseur sensiblement constante, constituant les extremités de la bague élastique (7) et enfermées entre les surfaces internes coniques (8) et l'épaulement conjugué de l'axe plein (1), sensiblement de même angle.

La précontrainte importante, permise par l'appui des courts cylindres (9) engagés à force dans le tube externe (5), assure une progressivité naturelle lors de l'entrée en compression de la surface libre des alvéoles (10). Mais, surtout, l'existence de cette précontrainte sensiblement axiale améliore notablement les possibilités de rotation alternée autour de l'axe (0), commun à l'axe plein (1) et au tube externe (5), ce qui est la fonction principale de l'articulation élastique.

La figure 2 est une coupe, perpendiculaire à l'axe (0) de l'articulation élastique, présentant les coupes concentriques des constituants.

Le tube externe (5) enferme la bague élastique (7) autour de l'axe plein (1) dans sa partie la plus massive, où il est adhérisé à la matière élastomerique de la bague élastique (7). La surface libre de celle-ci, en l'absence d'efforts d'excentrage, constitue les alvéoles (10) en retrait de quelques millimètres par exemple, sur un tiers de la circonférence chacune. Un sizième de la circonférence, de part et d'autre du plan AA' représenté verticalement, est en appui précontraint, à l'intérieur du tube externe (5), prolongeant ainsi les deux courts cylindres (9) dont le diamètre, à l'état libre,est supérieur à celui de l'alésage du tube externe (5). Ainsi, la rigidité radiale, dans la direction du plan AA', se trouve nettement plus élevée que dans la direction perpendiculaire, où est souhaité le filtrage.

Les axes seront placés de façon que cette rigidité soit sans influence, par exemple pour l'usage d'un levier, de direction horizontale sur la figure. Le méplat (3), qui tronque les paliers cylindriques incomplets (2) sert de détrompeur pour éviter toute mise en place incorrecte.

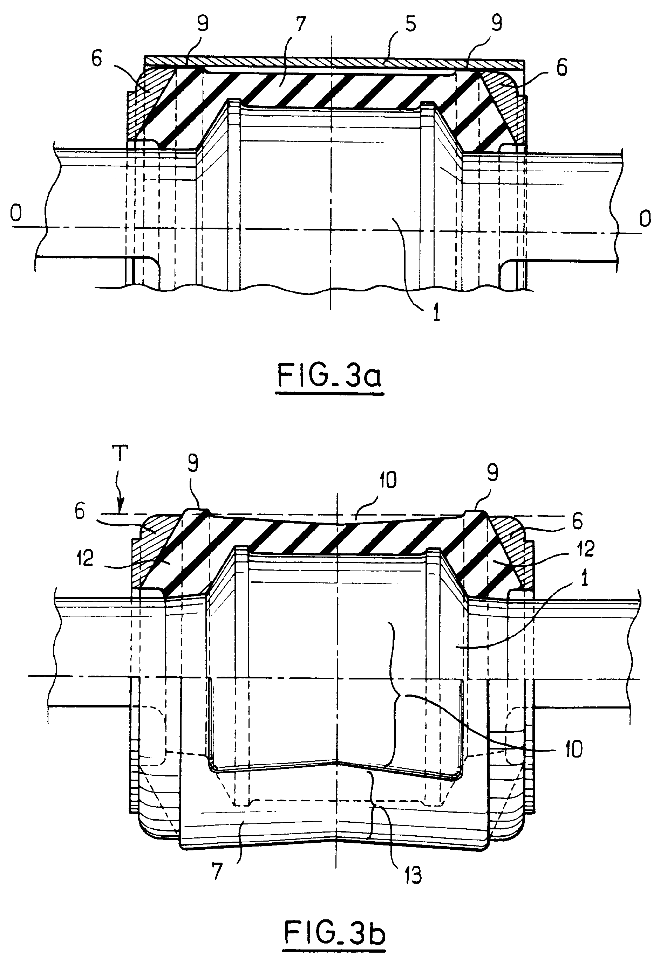

La figure 3 est constituée de deux demi-coupes axiales, dans les conditions géométriques identiques à celles de la figure 1, mais avant fermeture de l'ensemble par sertissage du tube externe (5) sur les rondelles de contrainte (6).

La vue 3a est la demi-coupe axiale après engagement du tube externe (5) par dessus les courts cylindres (9), constituants de la bague élastique (7), et qui débordaient des rondelles de précontrainte (6) par exemple de quelques millimètres, avant mise en place du tube externe (5).

La vue 3b est la demi-coupe, toujours par le plan (B), d'un composant, constitué de la bague élastique (7), moulée par dessus l'axe plein (1) et liée aux rondelles de contrainte (6), mais à l'état libre avant l'engagement du tube externe.

La silhouette (T) du tube externe est rappelée sur cette coupe, tangente aux rondelles de contrainte (6), pour montrer le dépassement des courts cylindres (9), eux-mêmes reliés en haut et en bas, entre eux, par une excroissance (13), sur environ un sizième de circonférence. L'excroissance (13) présente une forme appropriée pour venir tangentiellement, de façon à peu près rectiligne, contre le tube externe après réalisation de la précontrainte axiale. La forme, creusée à l'état libre, des alvéoles (10) a pour but de présenter un retrait sensiblement cylindrique de quelques millimètres par exemple, après l'emmanchement du tube externe et l'exécution de la précontrainte. La forme des excroissances (13), qui relient les courts cylindres (9) dans le plan AA′, est conjuguée à celle des alvéoles (10), de façon à tangenter sans glissement, sous contrainte, le tube externe, après la déformation axiale de précontrainte.

Ainsi, dans la rotation fonctionnelle de l'articulation autour de l'axe (0), il est essentiel, pour la tenue à la fatigue, que le cisaillement de la matière élastomérique de la bague élastique (7) se produise sans glissement, dans la région précontrainte des couronnes coniques (12), confinée par le tube externe sur les courts cylindres (9).

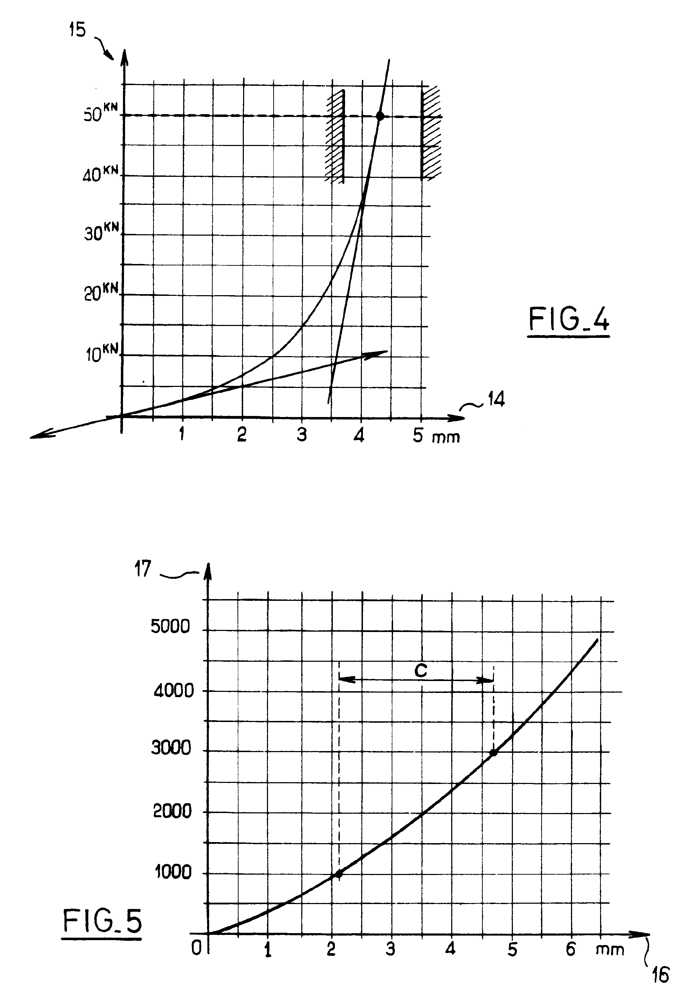

La figure 4 est un graphique mettant en évidence la variation progressive de la rigidité radiale par sa courbe caractéristique.

La course d'excentrage est indiquée en millimètres sur l'axe des abscisses (14). La réaction radiale est mesurée, sur l'axe des ordonnées (15), en KiloNewton.
La plage de filtrage efficace se situe de part et d'autre de l'origine - la courbe étant symétrique par rapport à ce point-et la rigidité commence à s'infléchir dès que la course dépasse le millimètre, dans un exemple de réalisation pratique dont la courbe de rigidité est illustrée.

Le retrait des alvéoles par rapport au tube externe est alors de l'ordre de trois millimètres, et une rigidité très accrue intervient au delà, mise en évidence par l'intersection des tangentes à la courbe. La progressivité de rigidité est due à l'entrée en contact, volontairement progressive de toutes les surfaces concernées.
Dans une application à un levier de suspension ferroviaire reliant l'essieu au chassis de bogie, le cahier des charges définit un excentrage minimal et maximal, sous l'effet d'une charge radiale donnée, telle 50 KiloNewton. La rigidité de filtrage est définie par la pente de la tangente à l'origine, sur le premier millimètre de course, pente qui peut également être tolérancée.

La figure 5 est un graphique illustrant la forme-type de la rigidité axiale, sensiblement linéaire, du même exemple de réalisation.
L'axe des abscisses (16) donnant les déformations axiales, en millimètres, l'axe des ordonnées (17) donne les réactions correspondantes, en décaNewton. Le cahier des charges caractérise la rigidité axiale par des tolérances sur la course axiale (C), entre deux valeurs telles que 1000 et 3000 décaNewton. Pour l'exemple traité, la valeur de (C) doit être comprise entre 2,2 et 2,9 millimètres. La courbe montre que cette rigidité axiale, dans une direction qui est celle de la précontrainte, se présente comme sensiblement linéaire sur toute la course utile. Cette dernière correspond, pratiquement, à la valeur de la précontrainte géométrique exercée, au montage, sur les rondelles de contrainte qui limitent axialement la bague élastique.
Le débattement "en conique", par l'excentrage dissymétrique des couronnes coniques, sur quelques degrés, se fait sans modification notable de ladite précontrainte et présente donc une rigidité dite conique, de valeur modérée quasi constante, qui serait bien représentée par une courbe-type d'allure analogue à celle de la rigidité axiale illustrée sur la figure 5.

Un procédé de fabrication d'articulations élastiques conformes à la présente invention fait appel aux procédés usuels de moulage de pièces en élastomère avec adhérisation physicochimique, par traitement préalable des armatures rigides, incorporées lors du moulage. L'assemblage au tube externe se fait, ensuite, au moyen d'une presse, par exemple hydraulique, équipée d'embouts en forme qui assurent simultanément la précontrainte axiale et le sertissage par déformation du tube externe, celui-ci étant préférentiellement en acier doux.

Le dispositif d'articulation élastique, objet de l'invention, apporte, par rapport aux réalisations de l'art antérieur, l'intégration, en une même pièce, des fonctions articulation mécanique, permettant quelques degrés de rotations alternées, filtrage à rigidité millimétrique très basse, de haut pouvoir filtrant et butée exerçant des efforts radiaux importants. Grâce à la progressivité du passage de la fonction filtrage à la fonction butée, il permet, néanmoins, la transmission d'efforts importants sans détérioration du matériau souple élastique assurant le filtrage. La localisation de la précontrainte dans les couronnes coniques permet d'accepter, à faible rigidité, des débattements coniques hors du plan où se produit normalement le débattement du levier tourillonnant sur son axe.

Un avantage de l'articulation élastique, objet de l'invention, est de pouvoir se substituer, sans modification, aux dispositifs de l'art antérieur.

L'homme de l'art pourra combiner l'usage de telles articulations élastiques sur une extrêmité d'un ou plusieurs leviers d'un parallélogramme par exemple, sans sortir du cadre de l'invention défini par la revendication 1.

## Revendications

1. Articulation élastique à grand filtrage radial et limitation progressive de rigidité, constituée d'un tube externe (5) entourant une bague élastique (7) en élastomère, solidarisée, par adhérisation, à un axe plein (1) et constituée de deux rondelles de contrainte (6) qui limitent la bague élastique (7) axialement et exercent sur elle une précontrainte axiale et comportant un jeu radial minime réservé, malgré l'existence de la précontrainte, entre la surface extérieure de ladite bague élastique (7) et la surface intérieure dudit tube externe (5), les deux surfaces venant en contact lorsque l'effort d'excentrage est accru au delà d'une plage d'utilisation à grande flexibilité radiale, caractérisée en ce que ladite bague élastique (7) est rendue solidaire, par adhérisation, des deux rondelles de contrainte (6) qui exercent sur elle la précontrainte axiale lorsque ledit tube externe (5) est serti sur leurs faces extrêmes, et en ce que ledit jeu est créé par des alvéoles (10) portées par ladite bague élastique (7) et qui comportent une surface libre adjacente à la surface intérieure du tube externe (5), les alvéoles (10) s'étendant sur le périmètre de ladite bague élastique (7) et la surface libre des alvéoles (10) venant progressivement en contact avec la surface intérieure adjacente dudit tube externe (5) lorsque l'effort d'excentrage est accru au delà d'une plage d'utilisation à grande flexibilité radiale.

2. Articulation élastique à grand filtrage radial et limitation progressive de rigidité, selon la revendication 1, caractérisée en ce que la surface (8) adhérisée entre les rondelles de contrainte (6) et la bague élastique (7) est conique et enferme, du fait de la précontrainte, des couronnes coniques (12), d'épaisseur sensiblement constante, confinées par l'appui de courts cylindres (9) sur le tube externe (5).

3. Articulation élastique à grand filtrage radial et limitation progressive de rigidité, selon la revendication 2, caractérisée en ce que les courts cylindres (9) qui limitent les couronnes coniques (12) sont, à l'état libre, d'un diamètre supérieur à celui du tube externe (5) qui vient les coiffer à l'assemblage - et en ce que la forme, creusée à l'état libre, des alvéoles (10) présente, après l'emmanchement et la précontrainte axiale, un retrait, par rapport audit tube externe (5), constant et sensiblement cylindrique.

## Patentansprüche

1. Gummigelenk mit großer radialer Dämpfung und progressiver Begrenzung der Härte, bestehend aus einem äußeren Rohr (5), das einen elastischen Ring (7) aus einem Elastomermaterial umgibt, der durch Verkleben mit einer massiven Welle einstückig gebildet ist und bestehend aus zwei Einspannschrauben (6), die den elastischen Ring (7) axial begrenzen und eine axiale Vorspannkraft ausüben und einen radialen Mindestspielraum aufweisen, der trotz der Vorspannung zwischen der Außenoberfläche des elastischen Rings (7) und der Innenoberfläche des äußeren Rohrs (5) beibehalten wird, wobei die beiden Oberflächen in Berührung gelangen, wenn die Exzentrizitäts-Beanspruchung einen Anwendungsbereich bei großer radialer Flexibilität übersteigt, dadurch gekennzeichnet, daß der elastische Ring (7) durch Verkleben mit zwei Einspann-Schrauben (6), die auf ihn die axiale Vorspannkraft ausüben, wenn das äußere Rohr (5) über ihre Außenseiten umgebördelt wird, einstückig ausgebildet ist, und daß der Spielraum von Zellen (10) erzeugt wird, die von dem elastischen Ring (7) getragen werden und die benachbart zu der inneren Oberfläche des äußeren Rohres (5) eine freie Oberfläche umfassen, wobei sich die Zellen (10) über den Umfang des elastischen Rings (7) erstrecken und die freien Oberflächen der Zellen (10) zunehmend mit der inneren Oberfläche des benachbarten Rohrs (5) in Berührung gelangen, wenn die Exzentrizitäts-Beanspruchung einen Anwendungsbereich bei großer radialer Flexibilität übersteigt.

2. Gummigelenk mit großer radialer Dämpfung und progressiver Begrenzung der Härte nach Anspruch 1, dadurch gekennzeichnet, daß die Klebefläche (8) zwischen den Einspannscheiben (6) und dem elastischen Ring (7) konisch ist und aufgrund der Vorspannung konische Kränze (12) mit im wesentlichen konstanter Dicke umschließt, die begrenzt. sind durch die Anlage kurzer Zylinder (9) an dem äußeren Rohr (5).

3. Gummigelenk mit großer radialer Dämpfung und progressiver Begrenzung der Härte nach Anspruch 2, dadurch gekennzeichnet, daß die kurzen Zylinder (9), die die konischen Kränze (12) begrenzen, im entspannten Zustand einen größeren Durchmesser haben als das äußere Rohr (5), das diese beim Zusammenbau bedeckt, und daß die Form der im entspannten Zustand vertieften Zellen (10) nach dem Aufpressen und nach der axialen Vorspannung in Bezug auf das äußere Rohr (5) konstant und im wesentlichen zylindrisch schrumpft.

## Claims

1. An elastic joint with high radial damping and progressive limitation of rigidity, constituted by an outer tube (5) surrounding an elastic ring (7) made of elastomer, firmly attached, by adhesion, to a solid axis (1) and constituted by two constraining washers (6) which limit the elastic ring (7) axially and exert an axial pre-constraint on it and comprising a small reserved radial play, despite the existence of the pre-constraint, between the exterior surface of said elastic ring and the interior surface of said outer tube, the two surfaces coming into contact when the out-of-centre effort is increased beyond a usable range with high radial flexibility, characterised in that said elastic ring (7) is firmly attached, by adhesion, to the two constraining washers which exert the axial pre-constraint on it, when said outer tube (5) is crimped over their end faces, and in that said play is created by cells (10) carried by said elastic ring (7) and which comprise a free surface adjacent to the interior surface of the outer tube (5), the cells (10) extending over the perimeter of said elastic ring (7) and the free surface of the cells (10) progressively coming into contact with the adjacent interior surface of said outer tube (5), when the out-of-centre effort is increased beyond a usable range with high radial flexibility.

2. An elastic joint with high radial damping and progressive limitation of rigidity, according to claim 1, characterised in that the surface (8) adhering between the constraining washers (6) and the elastic ring (7) is conical and, owing to the pre-constraint, encloses conical crowns (12), of substantially constant thickness, confined by the support of short cylinders (9) on the outer tube (5).

3. An elastic joint with high radial damping and progressive limitation of rigidity, according to claim 2, characterised in that the short cylinders (9) which limit the conical crowns (12) have, in the free state, a diameter greater than that of the outer tube (5) which covers them on assembly, and in that, after fitting and axial pre-constraint, the form of the cells (10), hollowed out in the free state, has a recess with respect to said outer tube (5), which is constant and substantially cylindrical.
